# EUROPÄISCHE PATENTSCHRIFT

(11) **EP 3 818 020 B1**
(45) Veröffentlichungstag und Bekanntmachung des Hinweises auf die Patenterteilung: **07.06.2023**
(21) Anmeldenummer: 19749313.3
(22) Anmeldetag: 31.07.2019
(51) Int. Cl.: C03B 27/04, C03B 27/044, C03B 40/00

(54) **VORRICHTUNG ZUM TEMPERN VON GLASSCHEIBEN**
DEVICE FOR ANNEALING GLASS PANES
DISPOSITIF DESTINÉ À TEMPÉRER DES PLAQUES DE VERRE

(30) Priorität: 21.09.2018 DE 102018123284
(43) Veröffentlichungstag der Anmeldung: 12.05.2021
(73) Patentinhaber: Sedak GmbH & Co. KG, 86368 Gersthofen (DE)
(72) Erfinder: SCHLÖGL, Fritz, 86391 Stadtbergen (DE); DECHAND, Alexander, 89407 Dillingen (DE)
(74) Vertreter: Charrier Rapp & Liebau
(86) Internationale Anmeldenummer: PCT/EP2019/070660
(87) Internationale Veröffentlichungsnummer: WO 2020/057837

(56) Entgegenhaltungen:
- EP-A2- 0 968 970
- FR-A- 1 516 644
- GB-A- 1 198 875
- US-A1- 2007 122 580

## Beschreibung

Die Erfindung betrifft eine Vorrichtung zum Tempern von Glasscheiben nach dem Oberbegriff des Anspruchs 1.

Aus dem Stand der Technik, beispielsweise der DE 10 2008 045 416 A1 ist es bekannt, dass Glasscheiben thermisch vorgespannt werden. Durch den Prozess der thermischen Vorspannung wird sogenanntes Einscheibensicherheitsglas hergestellt. Beim thermischen Vorspannen wird durch eine Wärmebehandlung im Inneren der Glasscheibe (Tempern) eine Zugspannung und an den Oberflächen und an den Rändern eine Druckspannung erzeugt. Hierdurch entstehen Druckspannungen in dem Glas, was zu einer erhöhten Biegezugfestigkeit der so hergestellten Glasscheiben führt. Ferner ist das Glas beständiger gegen Temperaturdifferenzen und zersplittert bei Zerstörung in kleine Bruchstücke, wodurch eine geringere Verletzungsgefahr entsteht.

Das Tempern erfolgt in der Regel dadurch, dass zunächst die gesamte Glasscheibe bis zu dem Erweichungspunkt des Glases erhitzt und anschließend einer raschen Abkühlung unterworfen wird. Auf diese Weise entstehen jedoch bei Beleuchtung mit zumindest teilpolarisiertem Licht mehr oder weniger starke unerwünschte Anisotropien in Gestalt von Farbeffekten in Folge von Doppelbrechung.

Auch die EP 2 853 517 B1 befasst sich mit dieser Problematik und schlägt eine Temperprozedur vor, bei der die Glasscheibe in einem Ofen hin und her bewegt wird, und anschließend zu zwei Kühlbereichen geführt wird, wobei in dem ersten Kühlbereich Kühlluft durch Schlitzdüsen auf die Oberfläche der Glasscheiben gestrahlt wird und in dem zweiten Kühlbereich Kühlluft durch lochartige Düsen auf die Oberfläche der Glasscheiben gestrahlt wird, wobei die Glasscheibe auf den Walzen in beiden Kühlbereichen hin und her bewegt wird. In beiden Kühlbereichen können beiden Oberflächen der Glasscheibe mit Kühlluft gekühlt werden. Die Walzen bzw. Rollen, auf denen die Glasscheiben geführt werden, sind vollständig mit Schnüren umwickelt.

Auch bei dieser Prozedur werden jedoch noch störende Anisotropien in den Glasscheiben erzeugt. Ferner ist die Führung der Kühlluft unsauber, turbulent und wenig effektiv.

Gegenstand der DE 693 12 169 T2 ist ein Verfahren und eine Vorrichtung zum Herstellen von gebogenen Glasscheiben, welche auf eine Biegetemperatur aufgeheizt sind, durch Vorbeiführen dieser Glasscheiben an einem Formgebungsbett mit einem im Wesentlichen kreisförmigen oder konischen Führungsprofil, wobei das Formgebungsbett aus einer Anordnung von Walzen gebildet ist, die die Glasscheibe antreiben und wobei das Bett aus einem Warmluftkissen gebildet ist. Hierbei erstrecken sich die Walzen zu beiden Seiten der zu transportierenden und zu biegenden Glasscheibe und sind auf beiden Seiten in Kontakt mit der Glasscheibe. Zwischen den Walzen sind Strömungskanäle angeordnet. Auch die Schriften US 3,881,907, EP 1 957 419 B1 und US 4,820,327 befassen sich mit Verfahren und Vorrichtungen zum Tempern von Glasscheiben und zeigen schlitzförmige Düsen sowie die Partitionierung einer Temperstation in mehrere Teile.

Nachteilig bei der beschriebenen Vorrichtung und dem dargestellten Verfahren ist der große Aufwand an Führungswalzen, welche zu beiden Seiten der Glasscheibe anzuordnen sind und welche so einzustellen sind, dass auch die oberen Führungswalzen einen gleichen Druck auf die Glasscheibe ausüben wie die unteren Führungswalzen auf denen die Glasscheibe mit Ihren Eigengewicht ruht. Die Vorrichtung ist somit aufwendig und teuer in der Herstellung und im Betrieb.

GB 1 198 875 A offenbart eine Vorrichtung, bei der die Kühlluftströme über und unter dem Bewegungsweg der Glasscheiben in mehrere isolierte Gruppen getrennt werden, um Turbulenzen zu reduzieren, indem ein Vermischen der Kühlluft aus den Gruppen verhindert wird, bevor sie die Scheiben berührt. Dies erfolgt mittels metallischen Umlenkbleche.

Es besteht daher die Aufgabe, eine Vorrichtung zum Tempern von Glasscheiben zu entwickeln, welche günstig in der Herstellung und im Betrieb ist und bei welcher die Kühlluft möglichst effektiv auf beide Oberflächen der Glasscheibe wirkt und Anisotropien innerhalb des Glases weiter reduziert werden.

Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel der Erfindung wird im Folgenden unter Bezugnahme auf die begleitende Zeichnung näher erläutert. Diese zeigt eine perspektivische Seitenansicht einer Glasscheibe in einer erfindungsgemäßen Vorrichtung zum Tempern, wobei die Kühlluftströmungen durch Pfeile eingezeichnet sind.

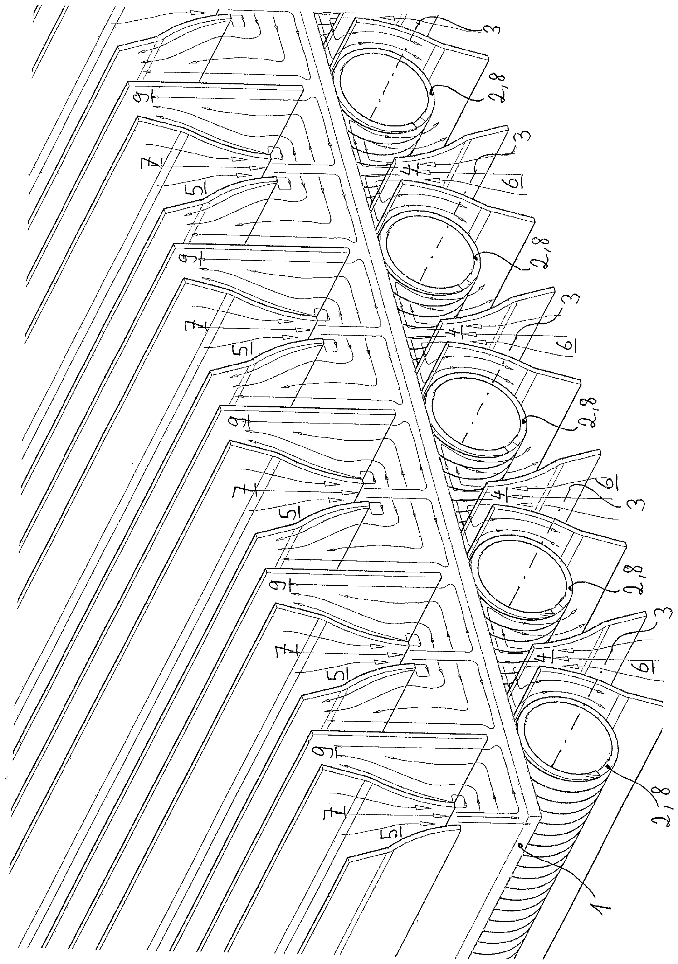

Die Figur zeigt eine Glasscheibe 1, welche in der dargestellten Vorrichtung einer Temperung unterzogen wird. Die Glasscheibe 1 liegt mit Ihrer Unterseite auf Walzen 2 auf, welche um Achsen 3 drehbar gelagert sind. Die Glasscheibe 1 kann auf diesen Walzen 3 transportiert oder auch hin und hergefahren werden, indem die Walzen 3 entsprechend angetrieben werden, was nicht im Einzelnen dargestellt ist. Die Walzen 3 sind mit einer Beschichtung versehen, wobei es sich um ein Band handeln, kann das z.B. aus Aramid oder Kevlar oder einem anderen geeigneten Material besteht. Die Wahl der Beschichtung wird bedingt durch die hohe Temperatur des aus dem Ofen kommenden aufgeheizten Glases, welche zwischen 600 und 700°C liegt.

Zwischen zwei benachbarten Walzen 2 befindet sich jeweils ein Strömungskanal 4, welcher sich über die Breite der Glasscheibe erstreckt und durchgehend ausgebildet ist. Die Wandungen des Strömungskanals 4 erstrecken sich hierbei, wie es in der Figur dargestellt ist, zwischen benachbarte Walzen 2, so dass die Kühlluft 6 im Bereich der Verbindungsebene der Achsen 3 der Walzen 2 oder sogar danach, also näher an der Unterseite der Glasscheibe 1, aus den Strömungskanälen 4 in Richtung auf die Unterseite der Glasscheibe 1 austritt. Die Strömungskanäle 4 sind, wie in der Figur dargestellt, zunächst breit und verengen sich dann in Richtung auf die Glasscheibe 1 zunehmend, so dass ein sich verjüngender Strömungskanal entsteht, der über die gesamte Breite der Vorrichtung, also die Länge der Walzen 2 bzw. die Breite der Glasscheibe 1, reicht. Die Struktur der Verjüngung dieser Strömungskanäle 4 entspricht etwa einem umgekehrten "V".

Da sich zwischen benachbarten Strömungskanälen 4 jeweils die Walzen 3 befinden, welche, da sie die Glasscheibe 1 tragen, unmittelbar bis an diese heranreichen, ergeben sich die in der Figur durch die Pfeile, welche die Luftströmung andeuten, einzelne Strömungsparzellen. Jede Strömungsparzelle weist einen Strömungskanal 4 auf, welcher die Kühlluft 6 einbringt. Diese wird sodann an der Unterseite der Glasscheibe 1 reflektiert und nach außen in Richtung zu den Walzen 3 gelenkt und dann wiederrum nach unten abgelenkt, so dass sie seitlich des Strömungskanals 4 abströmt.

Auch die den Walzen 2 abgewandte Oberseite der Glasscheibe 1 wird mit Kühlluft 7 beaufschlagt, welche aus gleichartig oder ähnlich aufgebauten Strömungskanälen 5 strömt, die oberhalb der Glasplatte 1 angeordnet sind und ebenfalls in etwa die Querschnittsform eines "V" aufweisen, so dass sie einen durchgehenden Strömungskanal bilden, über den Kühlluft 7 auf die obere Oberfläche der Glasscheibe 1 geblasen wird. Auch die oberen Strömungskanäle 5 erstrecken sich über die gesamte Breite der Vorrichtung, d.h., die Länge der Walzen 2 bzw. die Breite der Glasscheibe 1. Die oberen Strömungsdüsen 5 sind so angeordnet, dass sie etwa mit den unteren, gegenüberliegenden Strömungskanälen fluchten.

Oberhalb der Glasplatte 1 gibt es keine Walzen 2, welche eine natürliche Abtrennung zwischen den Strömungskanälen 5 bilden. Aus diesem Grunde befinden sich zwischen den oberen Strömungskanälen 5 Abtrennungen, welche durch Wandelemente 9 gebildet werden, deren Abstand zu den Glasplatten 1 während des Betriebs der Vorrichtung so gering wie möglich ist und maximal 10 mm beträgt. Die Wandelemente 9 verlaufen parallel zu den Strömungskanälen 5.

Aufgrund der Anordnung bilden sich sowohl unterhalb der Glasscheibe 1 als auch oberhalb der Glasscheibe 1 Strömungsparzellen. Während des Betriebs der Vorrichtung wird durch die unterhalb der Glasscheibe 1 angeordneten Strömungskanäle 4 Kühlluft 6 in Richtung der Unterseite der Glasscheibe 1 geleitet. Diese Kühlluft 6 ist durch Strömungspfeile eingezeichnet. Die Kühlluft 6 trifft etwa orthogonal auf die Unterseite der Glasscheibe 1, wird von dort zu beiden Seiten umgelenkt und trifft anschließend auf die Oberseite der beschichteten Walzen 2. Aufgrund der durchgehenden Beschichtung der Walzen 2 ergibt sich hier eine vollständig geschlossene Strömungszelle und die Kühlluft 6 wird anschließend nach unten umgeleitet und an deren beiden Außenseiten des Strömungskanals 4 ins Freie hinausgeleitet.

In ähnlicher Weise erfolgt der Strömungsverlauf auf der oberen Seite der Glasplatte 1. Hier wird die Kühlluft 7 aus den Strömungskanälen 5 nach unten in Richtung auf die Oberseite der Glasplatte 1 ausgeblasen, von dort nach links und rechts umgelenkt, bis sie an die sehr knapp über die Oberseite der Glasplatte 1 heranreichenden Wandelemente 9 gelangt. Der größte Teil der Kühlluft 7 wird an diesen Wandelementen 9 dann nach oben umgeleitet und gelangt über die Außenseiten des Strömungskanals 5 nach oben ins Freie.

Durch die erfindungsgemäße Anordnung werden sowohl unterhalb der Glasplatte 1 als auch oberhalb der Glasplatte 1 definierte Strömungsparzellen erzeugt, welche unterhalb der Glasplatte 1 durch jeweils zwei benachbarte Walzen 2 und oberhalb der Glasplatte 1 durch jeweils zwei benachbarte Wandelemente 9 gebildet werden. Aufgrund der durchgehenden, sehr breiten Strömungskanäle 4 und 5 ist es außerdem möglich, viel Luft mit geringer Geschwindigkeit, also ein hohes Luftvolumen bei geringem Druck, auf die beiden Seiten der Glasplatte 1 zu führen, was wiederum eine laminare Strömung bei hoher Kühlleistung ermöglicht. Durch das Ausschalten jeglicher Turbulenzen und diese laminare Strömung wird nicht nur eine gleichmäßigere Kühlung der Glasscheibe 1 und damit eine geringere optische Anisotropie gewährleistet, sondern auch eine höhere Effizienz der Kühlleistung, die um bis zu 50% weniger Energie benötigt als bekannte Systeme.

Ferner ergibt sich durch Anwendung der erfindungsgemäßen Vorrichtung eine erhebliche Verbesserung der Biegezugfestigkeit der behandelten Glasplatten. Durch die gleichmäßiger eingebrachten Vorspannungen im Glas werden die zum Bruch führenden Grenzspannungen nicht so früh erreicht wie bei der Vorgehensweise nach dem Stand der Technik.

## Patentansprüche

1. Vorrichtung zum Tempern von Glasscheiben (1), mit Walzen (2), auf welchen die Glasscheiben (1) liegend transportierbar sind und mit zwei Sätzen parallel zu den Achsen (3) der Walzen (2) verlaufenden Kühlluftzuführungen, aus welchen Kühlluft (6, 7) auf beide Seiten der Glasscheiben (1) führbar ist, wobei jede Kühlluftzuführung sich über die Breite der Glasscheiben (1) erstreckt und zu beiden parallel verlaufenden Seiten jeder Kühlluftzuführung Abtrennungen angeordnet sind, wobei die Rückführung der von den Glasscheiben (1) zurückgeworfenen Kühlluft (6, 7) zwischen diesen Abtrennungen erfolgt, wobei der erste Satz an Kühlluftzuführungen zwischen den Walzen (2) angeordnet ist und die Walzen (2) die Abtrennungen bilden und der zweite Satz an Kühlluftzuführungen (5) an der den Walzen (2) gegenüberliegenden Oberseite der Glasscheiben (1) angeordnet ist und die Abtrennungen durch Wandelemente (9) gebildet werden, **dadurch gekennzeichnet, dass** der Abstand der Wandelemente (9) zu den Glasplatten (1) so gering wie möglich ist und maximal 10 mm beträgt, die Kühlluftzuführungen als schlitzförmige Düsen ausgebildet sind, wobei jede Düse als sich über die Breite der Glasscheiben (1) erstreckender, durchgehender und sich verjüngender Strömungskanal (4, 5) ausgebildet ist, welcher mit den Abtrennungen eine Strömungsparzelle bildet, und die Rückführung der von den Glasscheiben zurückgeworfenen Kühlluft (6, 7) zwischen diesem Strömungskanal (4, 5) und den zugehörigen Abtrennungen erfolgt, wodurch die Strömungsgeschwindigkeit durch die Strömungskanäle (4, 5) so gering ist, dass sich in den Strömungsparzellen laminare Strömungen bilden.

2. Vorrichtung nach einem Anspruch 1, **dadurch gekennzeichnet, dass** die Walzen (2) vollständig umwickelt oder beschichtet sind.

## Claims

1. Device for annealing glass panes (1), having rollers (2), on which the glass panes (1) can be transported horizontally and having two sets of cooling air feeds running parallel to the axes (3) of the rollers (2), from which cooling air (6, 7) can be guided to both sides of the glass panes (1), each cooling air feed extending over the width of the glass panes (1) and partitions are arranged on both parallel sides of each cooling air feed, in which return of the cooling air (6, 7) reflected back from the glass panes (1) occurs between these partitions, the first set of cooling air feeds being arranged between the rollers (2) and the rollers (2) forming partitions, and the second set of cooling air feeds (5) being arranged on the top of the glass panes (1) opposite the rollers (2), and the partitions being formed by wall elements (9), **characterized in that** the distance between the wall elements (9) and the glass panes (1) is as small as possible and amounts to a maximum of 10 mm, the cooling air feeds are designed as slit-like nozzles, each nozzle being designed as a continuous and tapering flow channel (4, 5) extending over the width of glass panes (1), which forms a flow parcel with the partitions, and the return of the cooling air (6, 7) reflected back from the glass panes occurs between this flow channel (4, 5) and the corresponding partitions, whereby the flow velocity through the flow channels (4, 5) is so small that laminar flows form in the flow parcels.

2. Device according to one claim 1, **characterized in that** the rollers (2) are fully wrapped or coated.

## Revendications

1. Dispositif destiné à tempérer des plaques de verre (1), avec des rouleaux (2), sur lesquels les plaques de verre (1) peuvent être transportées à l'horizontale, et avec deux blocs d'arrivées d'air froid s'étendant de manière parallèle aux axes (3) des rouleaux (2), depuis lesquelles de l'air froid (6, 7) peut être guidé sur les deux côtés des plaques de verre (1), dans lequel chaque arrivée d'air froid s'étend sur la largeur des plaques de verre (1) et des séparations sont disposées des deux côtés s'étendant de manière parallèle de chaque arrivée d'air froid, dans lequel le retour de l'air froid (6, 7) renvoyé par les plaques de verre (1) se produit entre lesdites séparations, dans lequel le premier bloc d'arrivées d'air froid est disposé entre les rouleaux (2) et les rouleaux (2) forment les séparations et le deuxième bloc d'arrivées d'air froid (5) est disposé sur le côté supérieur, faisant face aux rouleaux (2), des plaques de verre (1) et les séparations sont formées par des éléments de paroi (9), **caractérisé en ce que** la distance des éléments de paroi (9) par rapport aux plaques de verre (1) est aussi petite que possible et est de 10 mm au maximum, les arrivées d'air froid sont réalisées en tant que buses en forme de fente, dans lequel chaque buse est réalisée en tant qu'un canal d'écoulement (4, 5) traversant s'étendant sur la largeur des plaques de verre (1) et se rétrécissant, lequel forme avec les séparations une parcelle d'écoulement, et le retour de l'air froid (6, 7) renvoyé par les plaques de verre se produit entre ledit canal d'écoulement (4, 5) et les séparations associées, ce qui a pour effet que la vitesse d'écoulement à travers les canaux d'écoulement (4, 5) est si faible que des écoulements laminaires se forment dans les parcelles d'écoulement.

2. Dispositif selon la revendication 1, **caractérisé en ce que** les rouleaux (2) sont entourés ou revêtus en totalité.
